(19) **Europäisches Patentamt European Patent Office Office européen des brevets**

(11) **EP 4 537 959 B1**

(12) **FASCICULE DE BREVET EUROPEEN**

(45) Date de publication et mention
de la délivrance du brevet:
**08.04.2026 Bulletin 2026/15**

(21) Numéro de dépôt: **24204872.6**

(22) Date de dépôt: **07.10.2024**

(51) Classification Internationale des Brevets (IPC):
**B22F 12/90** *(2021.01)*    **B22F 10/85** *(2021.01)*
**B22F 12/30** *(2021.01)*    **B33Y 30/00** *(2015.01)*
**B33Y 50/02** *(2015.01)*    **B29C 64/245** *(2017.01)*
**G01H 9/00** *(2006.01)*    **B29C 64/153** *(2017.01)*
**B29C 64/393** *(2017.01)*    **G01N 29/04** *(2006.01)*
G01D 5/353 *(2006.01)*    G01K 11/3206 *(2021.01)*
G01N 29/24 *(2006.01)*

(52) Classification Coopérative des Brevets (CPC):
(C-Sets disponibles)
**B22F 12/90; B22F 10/85; B22F 12/30;
B29C 64/153; B29C 64/245; B29C 64/393;
B33Y 30/00; B33Y 50/02; G01H 9/004;
G01N 29/04;** B22F 10/28; B33Y 10/00;
G01D 5/35316; G01K 11/3206; G01N 2291/0231;
(Cont.)

(54) **DISPOSITIF DE DÉTECTION D'UN DÉFAUT AU COURS DE LA FABRICATION ADDITIVE D'UNE PIÈCE**

VORRICHTUNG ZUR ERKENNUNG EINES FEHLERS BEI DER GENERATIVEN HERSTELLUNG EINES WERKSTÜCKS

DEVICE FOR DETECTING A DEFECT DURING THE ADDITIVE MANUFACTURING OF A PART

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **10.10.2023 FR 2310842**

(43) Date de publication de la demande:
**16.04.2025 Bulletin 2025/16**

(73) Titulaire: **Commissariat à l'Energie Atomique et
aux Energies
Alternatives
75015 Paris (FR)**

(72) Inventeurs:
• **LERNER, Alexandre
91191 Gif-sur-Yvette Cedex (FR)**
• **LAFFONT, Guillaume
91191 Gif-sur-Yvette Cedex (FR)**
• **POUILLE, Quentin
91191 Gif-sur-Yvette Cedex (FR)**
• **LADACI, Ayoub
91191 Gif-sur-Yvette Cedex (FR)**

(74) Mandataire: **INNOV-GROUP
209 Avenue Berthelot
69007 Lyon (FR)**

(56) Documents cités:
**WO-A1-2020/222875**

• **FLORIS IGNAZIO ET AL: "Fiber Optic Shape
Sensors: A comprehensive review", OPTICS
AND LASERS IN ENGINEERING, ELSEVIER,
AMSTERDAM, NL, vol. 139, 13 December 2020
(2020-12-13), XP086471598, ISSN: 0143-8166,
[retrieved on 20201213], DOI: 10.1016/
J.OPTLASENG.2020.106508**
• **ANONYMOUS: "Choisir les bornes dans les
cartes de contr�le", 10 August 2020
(2020-08-10), XP093148816, Retrieved from the
Internet <URL:https://web.archive.org/web/
20200810010245/https://www.
demarcheiso17025.com/fiche026.html>
[retrieved on 20240408]**

EP 4 537 959 B1

(52) Classification Coopérative des Brevets (CPC):
(Cont.)G01N 2291/02881

C-Sets
B22F 2999/00, B22F 10/30, B22F 12/90,
B22F 2202/01;
B22F 2999/00, B22F 10/30, B22F 12/90,
B22F 2203/11

**Description**

L'invention concerne un dispositif de détection d'un défaut au cours de la fabrication d'une pièce par un procédé de fabrication additive. L'invention concerne également un procédé de détection, à l'aide de ce dispositif de détection, d'un défaut au cours de la fabrication d'une pièce par un procédé de fabrication additive. Enfin, l'invention concerne un système de fabrication additive d'une pièce incorporant ce dispositif de détection d'un défaut.

Un tel dispositif connu de détection est divulgué dans la demande US2020290121A1. Ce dispositif est avantageux en ce qu'il permet de détecter tout défaut de fabrication qui se traduit par une modification du flux thermique entre la pièce en cours de fabrication et le support sur lequel elle est fabriquée. En particulier, ce procédé permet de détecter le décollement de la pièce en cours de fabrication du support sur lequel elle est fabriquée. Ainsi, si un défaut est détecté, en réponse, il est possible d'interrompre le procédé de fabrication avant sa fin pour éviter de gaspiller inutilement de la matière. Ce dispositif de détection est aussi simple à intégrer dans un appareil de fabrication additive car les capteurs de températures sont intégrés dans le support sur lequel la pièce est fabriquée.

Par contre, la résolution spatiale de ce dispositif de détection de défaut est limitée par le nombre de capteurs de température intégrés dans le support. En effet, il doit être possible, si nécessaire, de mesurer une température élevée avec chacun des capteurs de température. Une température élevée est ici une température supérieure à 300°C ou 500°C. C'est la raison pour laquelle dans le dispositif de détection de la demande US2020290121A1, les capteurs de température sont des thermocouples. Or, les thermocouples sont assez volumineux. De plus, chaque capteur de température est raccordé à une unité électronique de traitement par l'intermédiaire d'une liaison filaire respective. Ainsi, le support comporte non seulement les capteurs de température mais aussi, pour chacun d'entre eux, un sillon pour le passage des fils qui le raccorde à l'unité de traitement. L'espace occupé par les sillons utilisés pour le passage des fils limite substantiellement le nombre d'emplacements, dans le support, où il est possible de loger un capteur de température. Ainsi, avec le dispositif de détection décrit dans la demande US2020290121A1, il est très difficile d'obtenir une densité élevée de points de mesure et donc une résolution spatiale élevée. A cause de cela, les défauts situés entre deux capteurs de température sont difficiles à détecter et/ou sont détectés très tardivement, c'est-à-dire, généralement, à un instant où le défaut s'est agrandi jusqu'à un stade où au moins une partie de ce défaut s'étend au-dessus d'un des capteurs de température.

La demande WO2020222875A1 propose d'intégrer un capteur à fibre optique distribué (« distributed fiber optic sensor ») dans le support sur lequel est fabriqué la pièce lors du procédé de fabrication additive. Cela permet d'obtenir une densité élevée de points de mesure. Il est cependant souhaitable de développer un dispositif de détection qui exploite efficacement cette densité élevée de points de mesure pour accroître sa sensibilité.

De l'état de l'art est également connu de :

- Floris Ignasio et Al : « Fiber Optic Shape Sensors : A comprehensive review », Optics and Lasers in Engineering, Elsevier, Amdsterdam, Vol. 139, 2020-12-13, et
- la fiche pratique 026 du 10 août 2020 du site www.demarcheiso17025.com (consultable à partir du lien suivant : http://web.archive.org/web/20200810010245/https://www.demarcheiso17025.com/ fiche026.html)

L'invention vise à à proposer un dispositif de détection d'un défaut au cours de la fabrication d'une pièce par un procédé de fabrication additive dont la sensibilité est améliorée.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un système de fabrication additive comportant un dispositif de détection d'un défaut
- la figure 2 est une vue, en perspective, d'un support du système de la figure 1,
- la figure 3 est une vue, en perspective, d'une base du support de la figure 2,
- la figure 4 est une vue de dessus de la base de la figure 3,
- la figure 5 est une illustration schématique de l'architecture du dispositif de détection du système de la figure 1,
- la figure 6 est un organigramme d'un procédé de détection d'un défaut à l'aide du dispositif de la figure 5,
- les figures 7 et 8 sont des graphes illustrant les évolutions temporelles, respectivement, de températures et d'écarts types mesurés lors de la mise en œuvre du procédé de la figure 6,
- la figure 9 est un organigramme d'un autre procédé de détection d'un défaut à l'aide du dispositif de la figure 5,
- la figure 10 est une illustration schématique, en coupe verticale, d'un autre mode de réalisation du support de la figure 2.

Dans cette description, la terminologie, les conventions et les définitions des termes utilisés dans ce texte sont introduites dans un chapitre I. Ensuite, des exemples détaillés de modes de réalisation sont décrits dans un chapitre II en référence aux figures. Dans un chapitre III, des variantes de ces modes de réalisation sont présentées. Enfin, les avantages des différents modes de réalisation sont précisés dans un chapitre IV.

Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

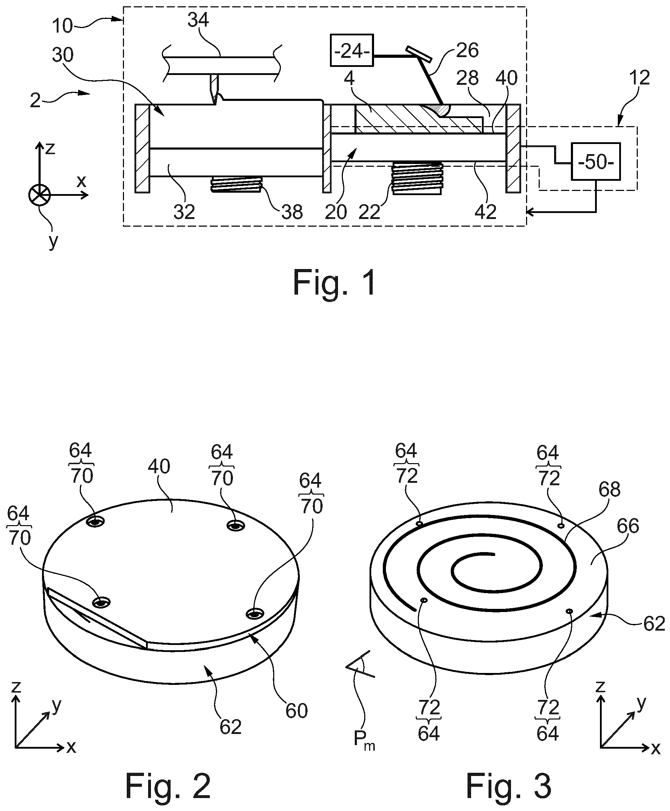

Les figures 1 à 4 et 9 sont orientées par rapport à un repère orthogonal XYZ, où les directions X et Y sont horizontales et la direction Z est verticale. Les termes tels que « au-dessus », « au-dessous », « haut », « bas », « supérieur », « inférieur » sont définis par rapport à la direction Z.

Le terme « température élevée » désigne une température supérieure à 300°C ou 500°C.

Le terme « basse fréquence » désigne une fréquence inférieure à 20 Hz et, typiquement, inférieure à 10 Hz ou 5 Hz.

Le terme « haute fréquence » désigne une fréquence supérieure à 1 kHz ou 5 kHz.

L'indice effectif $n_e$ de propagation d'une fibre optique est aussi connu sous le nom de « constante de phase du mode ». Il est défini par la relation suivante : $n_g = n_e - \lambda dn_e/d\lambda$, où $n_g$ est l'indice de groupe et $\lambda$ est la longueur d'onde du signal optique guidé par la fibre optique. L'indice effectif de propagation d'une fibre optique dépend des dimensions du cœur de cette fibre optique et des matériaux formant ce cœur et la gaine optique de cette fibre optique. Il peut être déterminé expérimentalement ou par simulation numérique.

Les appareils de fabrication additive sont également connus sous le nom de « imprimantes 3D ».

Chapitre II : Exemples de modes de réalisation

La figure 1 représente un système 2 de fabrication additive d'une pièce métallique 4. Le système 2 comporte :

- un appareil 10 de formation de couches successives empilées les unes sur les autres pour former, par empilement de ces couches, un ensemble 4 de pièces, et
- un dispositif 12 de détection d'un défaut au cours de la fabrication de l'ensemble 4 de pièces.

Dans ce mode de réalisation, à titre d'illustration, l'appareil 10 met en œuvre le procédé de fabrication additive connu sous le terme de « procédé de Fusion Laser Sélective sur lit de poudre » et désigné par l'acronyme L-PBF (« *Laser Powder Bed Fusion* ou SLM, *Selective Laser Melting* »). Un tel appareil est bien connu.

Ainsi, seuls ses principaux composants sont présentés. L'appareil 10 comporte :

- un support 20,
- un actionneur 22 qui déplace, par pas successifs, le support 20 vers le bas,
- une source laser 24 qui émet un faisceau laser 26 qui balaye la surface d'un lit 28 de poudre en suivant un trajet prédéterminé,
- un réservoir 30 de poudre équipé d'un fond mobile 32,
- un racleur 34 capable de racler la surface du réservoir 30 pour déposer sur l'ensemble 4 de pièces, en cours de fabrication, une nouvelle couche de poudre, et
- un actionneur 38 qui déplace, par pas successifs, le fond mobile 32 vers le haut.

Le support 20 comporte une face supérieure 40 et, du côté opposé, une face inférieure 42. L'ensemble 4 de pièces est fabriqué sur la face supérieure 40. La face supérieure 40 est horizontale.

Ici, la poudre utilisée dans l'appareil 10 est une poudre métallique telle qu'une poudre d'acier inoxydable 316L.

Le dispositif 12 de détection d'un défaut comporte le support 20 et une unité électronique 50 de traitement. Ici, le support 20 fait donc à la fois partie de l'appareil 10 et du dispositif 12 de détection.

Le support 20 est maintenant décrit plus en détail en référence aux figures 2 à 4.

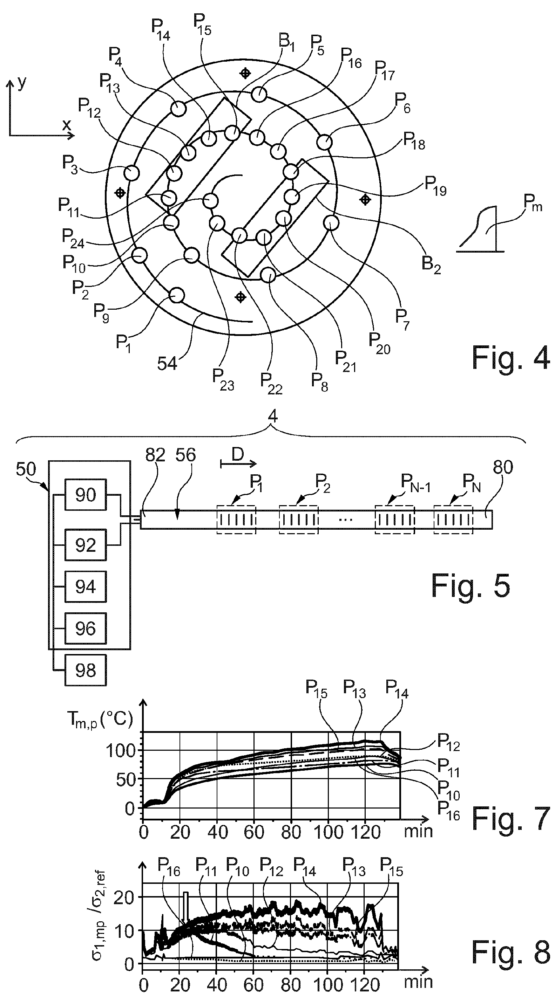

Le support 20 est instrumenté, c'est-à-dire qu'il comporte N points $P_p$ (Fig. 4) de mesures de la température ou d'un signal acoustique, où l'indice p est un numéro d'ordre qui identifie un point de mesure particulier. Les points $P_p$ de mesure sont tous contenus dans un plan horizontal $P_m$ (Fig. 3 et 4) de mesure situé sous la face supérieure 40. La distance entre le plan $P_m$ et la face 40 est, de préférence, inférieure à 5 mm ou 3 mm.

Des points $P_p$ sont répartis dans ce plan $P_m$ de manière à ce qu'un premier groupe, noté $G_1$ par la suite, de plusieurs points de mesure soit situé sous l'ensemble 4 de pièces lors de sa fabrication. Le nombre $N_{G1}$ de points de mesure du groupe $G_1$ est choisi pour que la densité des points de mesures sous l'ensemble 4 de pièces soit inférieure à 3 cm$^2$ ou à 2 cm$^2$. La densité de points de mesure est égale à la surface de la face de l'ensemble 4 de pièces en contact avec la face 40 divisée par le nombre de points de mesure situés sous l'ensemble 4 de pièces. En général, le nombre $N_{G1}$ est supérieur à quatre ou huit.

Dans cet exemple de mode de réalisation, l'ensemble 4 de pièces comporte deux pièces identiques simultanément fabriquées en parallèle sur la face 40 du support 20. Chaque pièce est mécaniquement distincte de l'autre et chacune directement en appui sur une zone respective de la face 40. Ici, chacune des pièces de l'ensemble 4 est un parallélépipède. Sur la figure 4, les zones d'appui de ces pièces sur la face 40 sont représentés par des rectangles $B_1$ et $B_2$. Ici, les dimensions des rectangles $B_1$ et $B_2$ sont identiques et égales à 45 mm par 12 mm. Les points de mesure $P_{11}$ à $P_{15}$ sont situés à l'intérieur du rectangle $B_1$ et les points de mesure $P_{18}$ à $P_{22}$ sont situés à l'intérieur du rectangle $B_2$. Ainsi, dans cet exemple, le groupe $G_1$ comporte les points de mesures $P_{11}$ à $P_{15}$ et $P_{18}$ à $P_{22}$.

Ici, des points $P_p$ de mesure sont également répartis dans le plan $P_m$ de manière à ce qu'un second groupe, noté $G_2$ par la suite, de $N_{G2}$ points de mesure ne soit pas situé sous l'ensemble 4 de pièces mais autour de chacune des zones d'appui $B_1$ et $B_2$. A cet effet, de préférence, le nombre $N_{G2}$ est supérieur à deux ou quatre ou huit. Ici, le nombre $N_{G2}$ de points de mesure du groupe $G_2$ est choisi pour que la densité de points de mesure situé hors des zones d'appui soit aussi inférieure à 3 cm$^2$ ou 2 cm$^2$. Le groupe $G_2$ comporte tous les points de mesure qui n'appartiennent pas au groupe $G_1$. Ainsi, dans l'exemple de la figure 4, le groupe $G_2$ comporte les points de mesures $P_1$ à $P_{10}$, $P_{16}$, $P_{17}$, $P_{23}$ et $P_{24}$.

Dans le cas où le support 20 comporte plusieurs points de mesures dans chacun des groupes $G_1$ et $G_2$, le nombre total $N$ de points de mesure est généralement supérieur à dix ou vingt ou trente. Ici, le nombre total $N$ de points de mesure est égal à vingt-quatre.

Dans ce mode de réalisation, les points $P_p$ de mesure sont situés le long d'une trajectoire 54 (Fig. 4) en forme de spirale. Ici, la spirale s'enroule plusieurs fois autour d'un axe vertical qui passe par le centre de la face supérieure 40.

Un capteur de température ou d'un signal acoustique est situé au niveau de chacun des points $P_p$. Chacun de ces capteurs doit être capable de supporter, sans se dégrader, une température élevée pouvant atteindre 900 °C ou 1000°C. Pour obtenir des capteurs résistants à de telles températures tout en permettant d'obtenir la densité souhaitée de points de mesure et sans complexifier la fabrication du dispositif 12, le support 20 contient une seule fibre optique 56 (Fig. 5) qui comporte un réseau de Bragg au niveau de chacun des points de mesure. Par la suite, le réseau de Bragg situé au niveau du point de mesure $P_p$ est désigné par le même symbole « $P_p$ ». La fibre optique 56 s'étend le long de la trajectoire 54 pour passer au niveau de chacun des points $P_p$ de mesure.

Chaque réseau de Bragg $P_p$ est caractérisé par une longueur d'onde $\lambda_{B,p}$. La longueur d'onde $\lambda_{B,p}$ est la longueur d'onde de la fréquence fondamentale $f_{B,p}$ de résonance de ce réseau de Bragg. Un signal optique incident sur le réseau de Bragg $P_p$ est réfléchi par ce réseau de Bragg $P_p$ uniquement si sa longueur d'onde est égale à la longueur d'onde $\lambda_{B,p}$ ou à la longueur d'onde $\lambda_{B,p,k}$ d'un de ses harmoniques, où $k$ est le numéro d'ordre de l'harmonique. Typiquement, le numéro d'ordre $k$ des harmoniques utilisés est inférieur à cinq.

Chaque réseau de Bragg $P_p$ est formé par une succession, le long de l'axe optique de la fibre 56, de motifs espacés les uns des autres d'un pas régulier $\Lambda_p$. Dans ces conditions, la longueur d'onde $\lambda_{B,p}$ est définie par la relation (1) suivante :

$$\lambda_{B,p} = 2*n_e*\Lambda_p,$$

où :

- $n_e$ est l'indice effectif de la fibre optique 56,
- $\Lambda_p$ est le pas du réseau de Bragg, et
- le symbole « * » désigne l'opération de multiplication scalaire dans ce texte.

La longueur d'onde $\lambda_{B,p,k}$ de l'harmonique d'ordre $k$ est alors définie par la relation (2) suivante : $\lambda_{B,p,k} = 2*n_e*\Lambda_p/k$.

Chaque motif d'un réseau de Bragg est par exemple formé à l'aide d'une impulsion d'un laser femtoseconde.

La longueur d'onde $\lambda_{B,p}$ et les longueurs d'onde $\lambda_{B,p,k}$ varient en fonction de la température et d'une déformation qui induit un changement de l'indice $n_e$ et du pas $\Lambda_p$. En particulier, ces longueurs d'onde $\lambda_{B,p}$ et $\lambda_{B,p,k}$ varient en fonction d'une déformation mécanique appliquée dont au moins une composante non-nulle est parallèle à l'axe optique du réseau de Bragg. Ainsi, un réseau de Bragg permet de mesurer la température et/ou un signal acoustique qui se propage parallèlement à l'axe optique du réseau de Bragg.

Dans ce texte, la longueur d'onde du réseau de Bragg utilisée pour mesurer la température et/ou le signal acoustique est appelée « longueur d'onde interrogée ». La longueur d'onde interrogée est donc soit la longueur d'onde fondamentale $\lambda_{B,p}$ soit la longueur d'onde $\lambda_{B,p,k}$ d'un des harmoniques de ce réseau de Bragg. Par la suite, la description est faite dans le cas particulier où la longueur d'onde interrogée de chaque réseau de Bragg est sa longueur d'onde fondamentale $\lambda_{B,p}$. Toutefois, tout ce qui est décrit dans ce cas particulier, s'applique au cas où la longueur d'onde interrogée de chaque réseau de Bragg est la longueur d'onde $\lambda_{B,p,k}$ d'un des harmoniques de ce réseau de Bragg.

Dans ce mode de réalisation, pour identifier la réponse de chaque réseau de Bragg, chacun des réseaux de Bragg $P_p$ est dimensionné pour présenter, dans des conditions normales de température et de pression, une longueur d'onde $\lambda_{B,p}$ différente de celles des autres réseaux de Bragg inscrits dans la fibre 56. Ici, les longueurs d'onde $\lambda_{B,p}$ sont uniformément réparties à l'intérieur de la plage d'interrogation de la fibre 56 de sorte que l'écart entre deux longueurs d'onde successives $\lambda_{B,p}$ et $\lambda_{B,p+1}$ est supérieur à 1 nm et, de préférence, supérieur à 3 nm, ou encore supérieur à 10 nm. Ici, la plage d'interrogation s'étend de 1460 nm à 1620 nm et les longueurs d'onde $\lambda_{B,p}$ sont espacées les unes des autres d'au moins 6 nm.

Ici, la longueur de chaque réseau de Bragg $P_p$

est optimisée pour être capable de mesurer à la fois une température et un signal acoustique. Par exemple, pour cela, la longueur de chaque réseau de Bragg est comprise entre 1 mm et 20 mm.

La fibre 56 peut comporter un revêtement réalisé dans un matériau tel qu'un polymère, métal, céramique, adapté à la plage de température de fonctionnement opérationnel des points $P_p$ de mesure.

La fibre 56 est intégrée au support 20 de façon amovible afin de permettre son remplacement par une autre fibre optique sans que cela nécessite de changer l'ensemble du support 20. A cet effet, dans ce premier mode de réalisation, le support 20 comporte un couvercle supérieur 60, une base 62 et des moyens 64 de fixation, sans aucun degré de liberté, du couvercle 60 sur la base 62.

Le couvercle 60 est ici un disque métallique dont l'épaisseur $e_{60}$ est inférieure à 5 mm et, de préférence, inférieure à 3 mm. Ici, l'épaisseur $e_{60}$ est égale à 2,5 mm. La face supérieure du couvercle 60 forme la face supérieure 40 du support 20. Le couvercle 60 comporte également une face inférieure plane du côté opposé à la face 40.

La base 62 est un cylindre métallique de section transversale identique ou sensiblement identique à celle du couvercle 60. La base 62 comporte une face supérieure 66 qui s'étend principalement dans un plan horizontal.

La base 62 comporte également un sillon 68 creusé dans sa face 66. Ce sillon est dimensionné pour recevoir la fibre 56. A cet effet, le sillon 68 suit la trajectoire 54.

Les moyens 64 de fixation sont déplaçables de façon réversible entre :

- un état monté, visible sur la figure 2, dans lequel le couvercle 60 est fixé sans aucun degré de liberté sur la base 62, et
- un état démonté dans lequel le couvercle 60 peut être retiré de la base 62.

Par exemple, ici, les moyens 64 comportent des vis 70 qui traversent le couvercle 60 et sont vissées dans des trous 72 respectifs réalisés dans la face 66 de la base 62.

Dans l'état monté, la face inférieure du couvercle est plaquée sur la face 66 de la base 62 de sorte que la fibre 56 est emprisonnée à l'intérieur du sillon 68. Éventuellement, une pâte thermiquement conductrice est interposée entre la fibre 56 et les parois du sillon 68 pour améliorer la conduction de la chaleur entre le couvercle 60 et la fibre 56.

La figure 5 représente plus en détail la fibre 56 et un mode de réalisation possible de l'unité 50 de traitement.

La fibre 56 s'étend entre une extrémité distale 80 et une extrémité proximale 82 raccordée à l'unité 50. L'extrémité 80 est située au niveau de l'extrémité du sillon 68 la plus proche du centre de l'axe de symétrie de la base 62. Par exemple, la fibre 56 est une fibre optique monomode également connue sous l'acronyme SMF (« Single Mode Fiber »).

L'unité 50 est configurée pour obtenir les mesures de la température ou du signal acoustique au niveau de chacun des points de mesure $P_p$ lorsque le procédé de fabrication additive est mis en œuvre et pour détecter, à partir de ces mesures, un défaut dans l'ensemble 4 de pièces au cours de sa fabrication. En particulier, dans ce premier mode de réalisation, l'unité 50 permet notamment de détecter l'apparition d'un décollement entre l'une des pièces de l'ensemble 4 et la face 40 du support 20. A cet effet, elle comporte :

- une source laser 90,
- un capteur optique 92,
- un microprocesseur programmable 94, et
- une mémoire 96.

La source laser 90 est optiquement raccordée à l'extrémité 82 de la fibre 56. Elle émet un signal optique qui se propage dans le cœur de la fibre 56 dans une direction D qui pointe vers l'extrémité 80. La longueur d'onde du signal optique émis par la source 90 est dans le domaine de l'optique. Par exemple, ici, la source 90 est une source laser à balayage qui émet un signal optique mono-fréquence à une longueur d'onde $\lambda_s$ qui varie au cours du temps pour balayer une plage prédéfinie de longueurs d'onde d'intérêt appelée ici « plage d'interrogation ». Ici, la plage d'interrogation est la plage s'étendant de 1460 nm à 1620 nm.

Le capteur 92 est lui-aussi optiquement raccordé à l'extrémité 82 de la fibre optique 56. Le capteur 92 mesure le signal optique rétro-diffusé par la fibre optique 56. Le signal optique rétro-diffusé se propage dans la fibre optique 56 en sens inverse de la direction D. Le capteur 92 présente une plage spectrale d'observation située dans le domaine optique et qui englobe la plage d'interrogation.

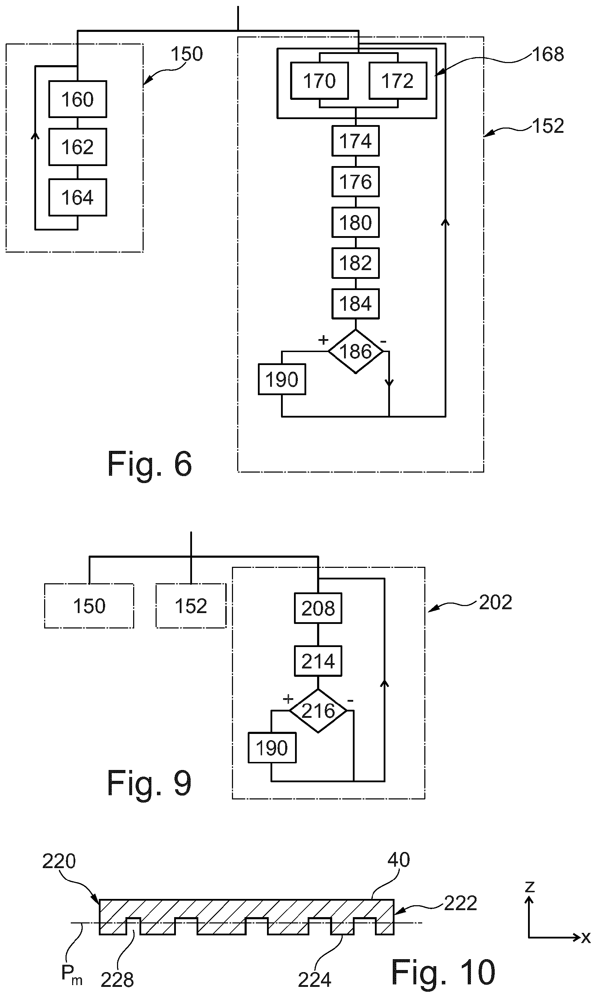

Le microprocesseur 94 exécute les instructions enregistrées dans la mémoire 96. La mémoire 96 contient les données et les instructions nécessaires à l'exécution du procédé de la figure 6 ou 9.

L'unité 50 est également raccordée à une interface homme-machine 98 afin de signaler la présence d'un défaut à un être humain. Par exemple, l'interface homme-machine 98 comporte un écran ou un voyant lumineux.

L'unité 50 est aussi raccordé à l'appareil 10 pour commander cet appareil et, en particulier, commander son arrêt.

Le fonctionnement du système 2 de fabrication est maintenant décrit en référence au procédé de la figure 6 dans le cas particulier où les réseaux de Bragg sont seulement utilisés pour mesurer des températures.

Le procédé de fabrication additive de l'ensemble 4 de pièces à l'aide du système 2 comporte une phase 150 de fabrication de l'ensemble 4 de pièces et, en parallèle, une phase 152 de détection, à l'aide du dispositif 12, d'un défaut au cours de la fabrication de l'ensemble 4 de pièces.

La phase 150 de fabrication de l'ensemble 4 de pièces se déroule principalement comme suit.

Lors d'une étape 160, l'actionneur 22 est commandé pour faire descendre le support 20 d'un pas prédéterminé vers le bas et l'actionneur 38 est commandé pour monter le fond 32 d'un pas prédéterminé vers le haut.

Ensuite, lors d'une étape 162, le racleur 34 est commandé pour déplacer une fine couche de poudre métallique de la surface du réservoir 30 à la surface du lit 28. Cette fine couche métallique recouvre alors la face supérieure de l'ensemble 4 de pièces en cours de fabrication.

Lors d'une étape 164, la source laser 24 est commandée pour que le faisceau laser 26 balaye la surface du lit 28 en suivant un trajet prédéterminé. Le faisceau laser 26 est focalisé sur la surface du lit et fait fondre la poudre métallique sur son trajet. En fondant puis se resolidifiant, la couche de poudre métallique se consolide donc avec la face supérieure de l'ensemble 4 de pièces métalliques en cours de fabrication. Ainsi, une nouvelle couche de métal est déposée sur la face supérieure de l'ensemble 4 de pièces.

Une fois que le faisceau 26 a parcouru l'ensemble du trajet prédéterminé, le procédé retourne à l'étape 160 pour déposer une nouvelle couche de métal sur l'ensemble 4 de pièces.

Les étapes 160 à 164 sont répétées jusqu'à ce que l'ensemble 4 de pièces soit entièrement fabriquée ou que la phase 150 de fabrication soit interrompue avant.

Lors de la phase 152 de détection d'un défaut, les étapes suivantes sont réitérées à intervalle régulier. Ici, les étapes suivantes sont réitérées à une fréquence d'acquisition $f_a$. Dans le mode de réalisation décrit ici où les réseaux de Bragg sont seulement utilisés pour mesurer une température, la fréquence $f_a$ peut être choisie inférieure à 1 kHz. Par exemple, dans ce cas, la fréquence $f_a$ est choisie entre 1 Hz et 500 Hz et, de préférence, entre 10 Hz et 500 Hz ou entre 100 Hz et 500 Hz. Ici, la fréquence $f_a$ est égale à 10 Hz.

La phase 152 débute par une étape 168 d'interrogation des réseaux de Bragg $P_p$. Par exemple, l'étape 168 comporte les deux opérations suivantes :

- lors d'une opération 170, la source laser 90 émet, dans la fibre optique 56, un signal optique qui balaye la totalité de la plage d'interrogation, et
- en parallèle, lors d'une opération 172, le capteur 92 mesure le signal optique rétro-diffusé par chacun des réseaux de Bragg $P_p$.

Ensuite, lors d'une étape 174, le microprocesseur 94 détermine une valeur actuelle de la longueur d'onde $\lambda_{B,p}$ pour chacun des N réseaux de Bragg $P_p$. De préférence, lors de cette étape, l'unité 50 filtre les valeurs acquises de la longueur d'onde $\lambda_{B,p}$ afin d'éliminer les composantes hautes fréquences de ce signal mesuré. En effet, la température $T_p$ au niveau d'un point de mesure $P_p$ varie lentement. A cet effet, l'unité 50 implémente ici un filtre passe bas dont la fréquence de coupure à - 3 dB est inférieure à $f_a/2$ et à 500 Hz. Si la fréquence $f_a/2$ est supérieure à 100 Hz, de préférence, la fréquence de coupure est également choisie, supérieure à 100 Hz. Par la suite, la valeur actuelle de la longueur d'onde $\lambda_{B,p}$ utilisée pour mesurer la température $T_p$ est notée « $\lambda_{B,p,T}$ ».

Lors d'une étape 176, le microprocesseur 94 établit une mesure de la température $T_p$ au niveau de chacun des points de mesure $P_p$. Par exemple, pour cela, la mémoire 96 comporte une valeur de référence préenregistrée $\lambda_{B,p,ref}$ pour la longueur d'onde $\lambda_{B,p}$ de chacun des réseaux de Bragg $P_p$. La valeur de référence a été mesurée dans des conditions de référence. Par exemple, la valeur de référence a été mesurée pour une température de 25°C. La mémoire 94 comporte aussi une table pré-enregistrée qui permet de convertir l'écart entre les valeurs $\lambda_{B,p,T}$ et $\lambda_{B,p,ref}$ en une valeur de la température $T_p$. Ici, l'unité 50 établit donc la température $T_p$ à partir de la valeur de référence $\lambda_{B,p,ref}$ et de la valeur actuelle $\lambda_{B,p,T}$ de la longueur d'onde $\lambda_{B,p}$ déterminée lors de l'étape 174.

Ensuite, lors d'une étape 180, l'unité 50 calcule, pour chaque point de mesure $P_p$, une valeur moyenne $T_{m,p}$ de la température $T_p$ sur une fenêtre glissante temporelle. La fenêtre glissante temporelle se termine à l'instant où la dernière mesure de la température $T_p$ a été établie. La durée $\Delta F$ de la fenêtre glissante temporelle est égale à la durée nécessaire pour déposer $N_c$ couches métalliques, où $N_c$ est un nombre rationnel généralement compris entre 0,1 et 5 ou entre 0,1 et 10 et, de préférence, entre 1 et 3 ou entre 1 et 2. Par exemple, ici, $N_c$ est égal à trois. Ainsi, pendant la fenêtre glissante temporelle, les étapes 160 à 164 sont exécutées $N_c$ fois.

Lors d'une étape 182, pour chaque point de mesure $P_p$, l'unité 50 calcule aussi l'écart type $\sigma_p$ des températures $T_p$ établies pendant la même fenêtre glissante temporelle. Ainsi, lors de l'étape 182, l'unité 50 calcule :

- les écarts types $\sigma_{1,p}$ des températures mesurées au niveau des points de mesure du groupe $G_1$, et
- les écarts types $\sigma_{2,p}$ des températures mesurées au niveau des points de mesure du groupe G2.

Lors d'une étape 184, l'unité 50 calcule une moyenne arithmétique des écarts types $\sigma_{2,p}$ calculés lors de l'étape 182 pour obtenir un écart type $\sigma_{2,ref}$ de référence.

Ensuite, lors d'une étape 186, pour chaque point de mesure $P_p$ du groupe $G_1$, le microprocesseur 94 détecte un défaut au niveau de ce point de mesure à partir du ratio $\sigma_{1,p}/\sigma_{2,ref}$, où :

- $\sigma_{1,p}$ est l'écart type calculé au niveau du point $P_p$ lors de la dernière exécution de l'étape 182, et

- $\sigma_{2,ref}$ est l'écart type de référence calculé lors de la dernière exécution de l'étape 184.

Par exemple, lors de l'étape 186, l'unité 50 compare le ratio $\sigma_{1,p}/\sigma_{2,ref}$ à un seuil prédéterminé $S_{ref}$ et déclenche le signalement d'un défaut si le ratio $\sigma_{1,p}/\sigma_{2,ref}$ tombe en dessous de ce seuil $S_{ref}$. Par exemple, le seuil $S_{ref}$ est choisi deux fois inférieur à la plus petite valeur du ratio $\sigma_{1,p}/\sigma_{2,ref}$ observée lorsqu'aucun défaut de fabrication ne se produit lors de la fabrication de l'ensemble 4 de pièces.

Si lors de l'étape 186, un défaut est détecté, alors le procédé se poursuit par une étape 190 de commande de l'appareil 10 et/ou de l'interface homme-machine 98. Par exemple, lors de l'étape 190, l'unité 50 commande l'appareil 10 pour interrompre immédiatement la fabrication de l'ensemble 4 de pièces ou pour modifier un paramètre de fabrication de l'ensemble 4 de pièces afin de limiter le défaut détecté. Lors de l'étape 186, généralement, l'unité 50 commande aussi l'interface homme-machine 98 pour indiquer à l'utilisateur de l'appareil 10 qu'un défaut a été détecté.

En absence de détection d'un défaut, le procédé retourne directement à l'étape 168.

Les figures 7 et 8 représentent l'évolution au cours de temps, respectivement, des températures $T_{m,10}$ à $T_{m,16}$ et des ratios $\sigma_{10}/\sigma_{2,ref}$ à $\sigma_{16}/\sigma_{2,ref}$. Ces évolutions temporelles ont été mesurées dans le cas où un décollement de l'ensemble 4 de pièces se produit au niveau des points $P_{11}$ et $P_{12}$. Ce décollement se produit environ 25 min après le début de la fabrication de l'ensemble 4 de pièces. Dans ce cas particulier, la fabrication de l'ensemble 4 de pièces a été poursuivie jusqu'à la fin malgré l'existence de ce décollement pour tracer l'évolution temporelle des températures $T_{m,p}$ et des ratios $\sigma_p/\sigma_{2,ref}$ correspondant du début jusqu'à la fin de la fabrication de l'ensemble 4 de pièces. Comme visible sur la figure 8, l'apparition du décollement au niveau des points $P_{11}$ et $P_{12}$ se traduit par une baisse significative des ratios $\sigma_{11}/\sigma_{2,ref}$ et $\sigma_{11}/a_{2,ref}$ qui ne se produit pas pour les autres ratios. Par contre, comme illustré sur la figure 7, l'apparition de ce défaut est beaucoup plus difficile à discerner uniquement à partir de l'évolution temporelle des températures moyennes $T_{m,p}$.

La figure 9 représente un procédé de détection susceptible d'être mis en œuvre avec le même matériel que celui décrit en référence à la figure 1 sauf que, en plus, des signaux acoustiques sont mesurés et utilisés. Dans ce cas, la fréquence $f_a$ d'acquisition utilisée est supérieure à 300 Hz et, de préférence, supérieure à 1 kHz et, encore plus avantageusement, supérieure à 5 kHz ou 10 kHz. Ici, la fréquence $f_a$ est égale à 10 kHz En effet, à partir du moment où la fréquence $f_a$ d'acquisition est supérieure à 1 kHz, chaque réseau de Bragg $P_p$ peut aussi être utilisé pour mesurer un signal acoustique $Sa_p$ qui se propage parallèlement à l'axe de la fibre optique 56 au niveau du point $P_p$. Or certains défauts qui apparaissent lors de la fabrication de l'ensemble 4 de pièces produisent un signal acoustique caractéristique. A titre d'exemple de tels défauts, il peut s'agir de l'apparition d'une fracture ou d'un défaut de porosité ou bien encore de la propagation d'une fissure.

Le procédé mis en œuvre par l'unité 50 est alors le même que celui de la figure 6 sauf que, en plus de la phase 152, il comporte une phase 202 de détection d'un défaut à partir des signaux acoustiques $Sa_p$ mesurés.

La phase 202 débute par une étape 208 d'interrogation des réseaux de Bragg $P_p$. L'étape 208 peut être réalisée comme l'étape 168 ou, de préférence, en mettant en œuvre une technique permettant d'extraire précisément les variations hautes fréquences de chaque longueur d'onde $\lambda_{B,p}$. Par exemple, cette technique est celle décrite dans l'article suivant : Arnaud Recoquillay et al. : « Guided wave imaging of composite plates using passive acquisitions by fiber Bragg gratings », J. Acoustic, Soc. Am. 147(5), Mai 2020. Ici, l'étape 208 est commune aux phases 152 et 202 de détection. L'étape 208 remplace l'étape 168 et n'est exécutée qu'une seule fois à la fréquence $f_a$. Ainsi, chaque réseau de Bragg $P_p$ est à la fois utilisé pour mesurer la température $T_p$ et un signal acoustique $Sa_p$ au niveau du point $P_p$ de mesure. Ceci est rendu possible par le fait que l'information sur la température $T_p$ est codées par les composantes basses fréquences du signal mesuré alors que les informations sur le signal acoustique $Sa_p$ sont codées par les composantes hautes fréquences du même signal mesuré.

Ensuite, lors d'une étape 214, le microprocesseur 94 détermine une valeur actuelle de la longueur d'onde $\lambda_{B,p}$ pour chacun de N réseaux de Bragg $P_p$. Lors de cette étape, l'unité 50 filtre les valeurs acquises de la longueur d'onde $\lambda_{B,p}$ afin d'éliminer les composantes basses fréquences de ce signal mesuré. Pour cela, l'unité 50 implémente un filtre passe-bande qui sélectionne uniquement les composantes hautes-fréquences du signal mesuré par chacun des réseaux de Bragg. Typiquement, la fréquence de coupure basse à - 3 dB de ce filtre est supérieure à celle du filtre passe bas mis en œuvre lors de l'étape 174 et aussi supérieure à 20 Hz ou 100 Hz ou 300 Hz. La fréquence de coupure haute à - 3 dB de ce filtre est inférieure ou égale à $f_a/2$. Le signal ainsi filtré est le signal acoustique $Sa_p$ mesuré au niveau du point $P_p$.

Ensuite, lors d'une étape 216, l'unité 50 traite chacun des signaux acoustiques mesurés $Sa_p$ comme décrit, par exemple, dans la demande WO2017216059A1 pour détecter un défaut à partir d'un tel signal acoustique. Plus précisément, lors de l'étape 216, un classifieur est utilisé pour classer le signal acoustique $Sa_p$ soit dans la catégorie des signaux représentatifs d'un défaut soit, au contraire, dans la catégorie des signaux non-représentatifs d'un défaut.

Le procédé se poursuit ensuite par l'étape 190 seulement si le signal acoustique $Sa_p$ a été classé dans la catégorie des signaux acoustiques représentatifs d'un défaut.

La figure 10 représente un support 220 susceptible d'être utilisé à la place du support 20. Le support 220 est identique au support 20 sauf que le couvercle 60 est omis et la base 62 est remplacée par une base 222. La base 222 comporte un sillon 228 identique au sillon 68 sauf qu'il est creusé dans la face inférieure 224 de la base 222. Dans ce mode de réalisation, la profondeur du sillon 228 est suffisante pour que le fond du sillon soit situé à moins de 5 mm ou à moins de 3 mm de la face supérieure 40 de la base 222. La fibre optique 56 est alors insérée dans ce sillon 228 à partir de la face inférieure de la base 222 puis enfoncée dans le sillon 228 jusqu'à qu'elle soit plaquée contre le fond de ce sillon 228. La fibre optique 56 est alors maintenue plaquée contre le fond du sillon 228, par exemple, à l'aide d'une pâte adhésive.

Chapitre **III** : Variantes :

L'ensemble 4 de pièces peut comporter une seule pièce ou, au contraire, plus de trois ou cinq pièces mécaniquement indépendantes les unes des autres.

Le nombre $N_{G2}$ de points de mesure situés sous aucune pièce à fabriquer peut être nul ou égal à un ou deux.

En variantes, les longueurs d'onde $\lambda_{B,p}$ sont toutes égales. Dans ce cas, chacun des réseaux de Bragg est configuré pour être faiblement réflecteur à la longueur d'onde $\lambda_{B,p}$, c'est-à-dire qu'il réfléchit moins de 5 % du signal optique incident à cette longueur d'onde. Généralement, chaque réseau de Bragg réfléchit au moins 0,5 % ou 1 % du signal optique incident à la longueur d'onde $\lambda_{B,p}$. Dans cette variante, c'est par exemple le temps auquel est reçu le signal optique réfléchi par un réseau de Bragg qui permet de distinguer la réponse de ce réseau de Bragg des réponses des autres réseaux de Bragg inscrits dans la fibre optique. Par contre, cette variante ne permet pas de mesurer les signaux acoustiques.

D'autres trajectoires qu'une trajectoire en forme de spirale sont possibles pour le sillon 68. Par exemple, le sillon 68 peut aussi suivre une trajectoire en zigzag.

En variante, le sillon 68 est creusé dans la face inférieure du couvercle 60 et non pas dans la face supérieure 66 de la base 62. Dans une autre variante, le sillon 68 est à la fois creusé dans la face supérieure de la base 62 et dans la face inférieure du couvercle 60.

Dans le cas où chacun des réseaux de Bragg est uniquement utilisé pour mesurer un signal acoustique respectif $Sa_p$, alors la fibre optique 56 peut s'étendre dans un plan $P_m$ situé à plus de 5 mm de la face supérieure 40.

Dans le cas où un réseau de Bragg est uniquement utilisé pour mesurer une variation de température, de préférence, sa longueur est inférieure ou égale à 2 mm ou 1 mm. En effet, cela permet de mitiger l'effet des gradients thermiques. A l'inverse, si un réseau de Bragg est uniquement utilisé pour mesurer un signal acoustique $Sa_p$, alors sa longueur peut être spécifiquement optimisée pour la mesure de ce signal acoustique $Sa_p$ sans tenir compte du fait qu'il doit en plus être capable de mesurer une température.

En variante, une première partie des réseaux de Bragg est utilisée pour mesurer la température et une seconde partie des réseaux de Bragg de la fibre optique 56, différente de la première partie, est utilisée pour mesurer les signaux acoustiques $Sa_p$. Dans une variante particulière, un réseau de Bragg de la fibre optique 56 appartient seulement à la première ou à la seconde partie. Dans ce dernier cas, un même réseau de Bragg de la fibre optique 56 est soit seulement utilisé pour mesurer la température $T_p$ soit seulement utilisé pour mesurer le signal acoustique $Sa_p$. Typiquement, les longueurs des réseaux de Bragg de la première partie sont uniquement optimisées pour des mesures de températures et les longueurs des réseaux de Bragg de la seconde partie sont uniquement optimisées pour des mesures de signaux acoustiques.

Le support peut comporter plus d'une fibre optique. Par exemple, en variante, le support comporte seulement une première et une seconde fibres optiques. Ces deux fibres optiques sont raccordées à l'unité 50 de traitement et chacune de ces fibres optiques est utilisée comme décrit dans le cas particulier de la fibre 56. Dans ce cas, ces deux fibres peuvent être reçues dans deux sillons distincts qui, de préférence, ne se croisent pas. De préférence, la première fibre optique comporte uniquement des réseaux de Bragg dont les longueurs sont optimisées uniquement pour la mesure de températures et la seconde fibre optique comporte uniquement des réseaux de Bragg dont les longueurs sont uniquement optimisées pour la mesure de signaux acoustiques.

D'autres modes de réalisation des moyens 64 de fixation sont possibles. Par exemple, en variante, le couvercle comporte une portion filetée et la base comporte un trou taraudé dans lequel la portion filetée du couvercle peut être vissée pour passer de l'état démonté à l'état monté. Par exemple, la face 66 forme le fond de ce trou taraudé. Dans cette variante, la portion filetée des moyens de fixation ne forme qu'un seul bloc de matière avec le couvercle.

Dans un mode de réalisation particulièrement simplifié, la fibre 56 n'est pas remplaçable. Par exemple, le couvercle 60 est soudé sur la face 66 de la base 62. Dans ce cas, les moyens amovibles 64 de fixation sont omis.

Lorsque l'unité 50 commande automatiquement l'appareil 10 en réponse à la détection d'un défaut, l'interface homme-machine 98 peut être omise. A l'inverse, l'unité 50 peut ne pas commander l'appareil 10 en réponse à la détection d'un défaut et simplement signaler l'existence de ce défaut par l'intermédiaire de l'interface homme-machine 98. Dans ce dernier cas, c'est à l'opérateur de l'appareil 10 de mettre en œuvre les actions nécessaires pour tenir compte du défaut signalé par l'unité 50.

Le dispositif 12 de détection peut aussi être mis en œuvre dans d'autres appareils de fabrication additive d'un ensemble de pièces métalliques. Par exemple, il peut être mis en œuvre avec un appareil implémentant le procédé de fabrication additive connue sous le nom de Frittage Laser Sélectif sur lit de poudre ou SLS (« *Selective Laser Sintering* »)*,* ou le dépôt d'énergie dirigé également connu sous l'acronyme DED (« *Directed Energy Deposition* »). Il peut aussi être mis en œuvre dans un appareil de fabrication additive d'un ensemble de pièces métalliques n'utilisant pas un laser pour faire fondre la poudre métallique. Par exemple, il peut être mis en œuvre dans un appareil implémentant le procédé de fabrication additive WAAM (« *Wire Arc Additive Manufacturing »).*

Ce qui a été décrit ici dans le cas particulier de la fabrication additive d'un ensemble de pièces métalliques s'applique aussi à la fabrication additive d'un ensemble de pièces réalisées dans d'autre matériau et, en particulier, à la fabrication additive d'un ensemble de pièces en polymère.

Au lieu d'utiliser la longueur d'onde $\lambda_{B,p}$ de chaque réseau de Bragg, il est possible d'utiliser à la place la longueur d'onde $\lambda_{B,p,k}$ d'un harmonique de ce réseau de Bragg.

En variante, un défaut au niveau d'un point de mesure est simplement détecté en utilisant les écarts types $\sigma_{1,p}$ et sans utiliser l'écart type $\sigma_{2,ref}$ ou les écarts types $\sigma_{2,p}$. Par exemple, un défaut est détecté lorsque la pente de la variation temporelle d'un des écarts types $\sigma_{1,p}$ tombe en dessous d'un seuil prédéterminé ou s'écarte des écarts types calculés pour les autres points de mesure du groupe $G_1$ d'une valeur supérieure à un autre seuil prédéterminé. Dans ce cas, le nombre $N_{G2}$ de points de mesure peut être nul.

Dans une variante simplifiée, les étapes 182 et 184 sont omises et un défaut est détecté uniquement à partir des mesures de température sans utiliser les écarts types.

Chaque écart type $\sigma_p$ peut aussi être calculé directement à partir des mesures des longueurs d'onde $\lambda_{B,p}$ avant qu'elles soient converties en une mesure de température exprimée en degré. Pour cela, par exemple, à chaque intervalle régulier et pour chaque point de mesure $P_p$, l'unité 50 calcule la moyenne des longueurs d'onde $\lambda_{B,p}$ mesurée pendant la fenêtre glissante temporelle. Ensuite, l'écart type $\sigma_p$ des variations de la longueur d'onde $\lambda_{B,p}$ mesurée pendant cette fenêtre glissante temporelle est calculé. L'écart type $\sigma_p$ ainsi obtenu est représentatif de l'écart type de la température $T_p$ pendant cette fenêtre glissante temporelle.

Dans une variante simplifiée, le groupe $G_2$ ne comporte qu'un seul point de mesure. Dans ce cas, l'écart type $\sigma_{2,ref}$ est égal à l'écart type $\sigma_{2,p}$ calculé pour l'unique point de mesure du groupe $G_2$. Dans une telle variante, il peut exister des points de mesure du groupe $G_2$ qui ne sont donc pas utilisés pour détecter un défaut de fabrication.

L'étape 180 de calcul de la température moyenne $T_{m,p}$ peut être omise. Dans ce cas, le calcul de la température moyenne $T_{m,p}$ est réalisé uniquement au cours de l'étape 182 pour calculer les écarts types $\sigma_p$.

Lors de l'étape 184, l'écart type de référence $\sigma_{2,ref}$ peut être calculé à partir d'une moyenne pondérée des écarts types $\sigma_{2,p}$.

Plusieurs des variantes décrites ci-dessus peuvent être combinées dans un même mode de réalisation.

Chapitre IV : Avantages des modes de réalisation décrits :

Le fait que le support 20 soit à la fois utilisé pour réaliser l'appareil 10 et le dispositif 12 de détection simplifie la réalisation du dispositif de détection car il n'est pas nécessaire d'intégrer dans l'appareil 10 des pièces supplémentaires pour servir de support aux points de mesure.

Le fait d'utiliser une fibre optique comportant un réseau de Bragg au niveau de chaque point de mesure permet d'augmenter substantiellement le nombre de points de mesure qu'il est possible de placer dans le support. En effet, l'augmentation du nombre de points de mesure peut être réalisé sans augmenter l'encombrement du sillon qui reçoit la fibre optique, simplement en ajoutant des réseaux de Bragg dans la fibre optique. Ainsi, l'augmentation du nombre de points de mesure peut être réalisée à encombrement constant. Grâce à cela, il est possible d'obtenir une densité de points de mesure beaucoup plus élevée et donc une résolution spatiale supérieure à celle qui peut être obtenue lorsque des thermocouples sont utilisés.

De plus, de façon similaire à un thermocouple, un réseau de Bragg permet de mesurer des températures élevées.

Enfin, la fréquence d'acquisition $f_a$ de la longueur d'onde réfléchie par un réseau de Bragg peut être très élevée. Grâce à cela, un réseau de Bragg peut aussi être utilisé pour mesurer un signal acoustique. Ainsi, la même fibre optique peut être utilisée pour mesurer, en même temps ou en alternance, des températures et des signaux acoustiques. Cette possibilité peut alors être mise à profit pour détecter un plus grand nombre de défauts au cours de la fabrication. Il est souligné ici que la diffusion de Rayleigh d'une fibre optique ne permet pas de mesurer des signaux acoustiques.

De plus, à cause du fait que la fibre optique comporte des réseaux de Bragg, les contraintes sur la trajectoire du sillon sont moindres que lorsque c'est la diffusion de Rayleigh qui est utilisée.

Le fait de placer la fibre optique dans un sillon situé entre la base et le couvercle permet de remplacer facilement la fibre optique par une autre fibre optique comportant, par exemple, plus de réseaux de Bragg. Ceci est rendu possible par le fait qu'un réseau de Bragg permet de mesurer une température et/ou un signal acoustique sans nécessiter un ancrage définitif de la fibre optique dans le support 20.

Le fait de placer la fibre optique dans le sillon 228 creusé dans la face inférieure du support 220 permet aussi de facilement remplacer la fibre optique par une autre fibre optique.

Le fait d'utiliser des réseaux de Bragg inscrits dans la même fibre optique 56 pour mesurer à la fois les températures au niveau de différents points de mesure et les signaux acoustiques au niveau de différents points de mesure, augmente la capacité du dispositif 12 à détecter un défaut. De plus, cette amélioration est obtenue sans complexifier la réalisation du support 20.

Le fait d'utiliser le même réseau de Bragg pour mesurer, au niveau du même point de mesure, à la fois la température et le signal acoustique, simplifie la réalisation du support 20.

Le fait que les longueurs d'onde $\lambda_{B,p}$ de chaque réseau de Bragg soient différentes, permet de démultiplexer plus facilement les signaux rétro-diffusés et donc d'augmenter le nombre de points de mesure situés le long de l'axe de la fibre optique. Cela permet aussi d'associer plus précisément un signal rétro-diffusé à un réseau de Bragg particulier et donc de connaître avec une grande précision l'emplacement, le long de l'axe de la fibre, où est réalisée la mesure.

Une fréquence d'acquisition $f_a$ supérieure à 1 kHz permet de mesurer un signal acoustique à l'aide de ce réseau de Bragg.

La capacité du dispositif de détection à mesurer des températures supérieures à 500°C permet d'utiliser ce dispositif de détection avec pratiquement tous les procédés de fabrication additive et, en particulier, les procédés de fabrication additive de pièces métalliques où la température du support peut être très élevée.

Le fait de détecter un défaut à partir de l'écart type $\sigma_{1,p}$ permet d'améliorer la sensibilité du procédé de détection.

Le fait de détecter un défaut à partir du ratio $\sigma_{1,p}/\sigma_{2,ref}$ permet d'augmenter encore plus la sensibilité du procédé de détection.

**Revendications**

1. Dispositif de détection d'un défaut au cours de la fabrication d'une pièce par un procédé de fabrication additive, ce dispositif comportant :

   - un support (20 ; 220) comportant :

      - une face supérieure (40) sur laquelle la pièce est fabriquée lorsque le procédé de fabrication additive est mis en œuvre,
      - des points de mesures ($P_1$ à $P_{24}$) de la température ou d'un signal acoustique, ces points de mesure étant contenus dans un plan ($P_m$) de mesure situé sous la face supérieure et répartis dans ce plan de mesure de manière à ce que au moins l'un de ces points de mesure soit situé sous la pièce lorsque le procédé de fabrication additive est mis en œuvre,
      - une fibre optique (56) qui s'étend depuis une extrémité proximale (82) jusqu'à une extrémité distale (80) en passant par chacun des points de mesure ($P_1$ à $P_{24}$),

   - une unité (50) de traitement raccordée à l'extrémité proximale (82) de la fibre optique et configurée pour obtenir les mesures de la température ou du signal acoustique au niveau de chacun des points de mesure lorsque le procédé de fabrication additive est mis en œuvre et pour détecter, à partir de ces mesures, un défaut dans la pièce au cours de sa fabrication par le procédé de fabrication additive,

   **caractérisé en ce que** :

   - la fibre optique comporte, au niveau de chacun de ces points de mesure, un réseau de Bragg, et
   - l'unité (50) de traitement est configurée :

      - pour obtenir la mesure de la température ou du signal acoustique au niveau de chacun des points de mesure à partir d'une mesure d'un signal optique ayant interagi avec le réseau de Bragg situé au niveau de ce point de mesure, et
      - pour exécuter les étapes suivantes :

         - pour chaque point de mesure d'un premier groupe de points de mesure et à intervalle de temps régulier, le calcul d'un écart type $\sigma_{1,p}$ représentatif de l'amplitude des variations de la température mesurée pendant une fenêtre glissante temporelle prédéterminée au niveau de ce point de mesure, les points de mesure de ce premier groupe étant situés sous la pièce en cours de fabrication, puis
         - la détection d'un défaut au niveau d'un point de mesure du premier groupe à partir des différentes valeurs successives de l'écart type $\sigma_{1,p}$ calculées pour chaque intervalle de temps régulier.

2. Dispositif selon la revendication 1, dans lequel le support comporte :

   - une base (62) comportant une face supérieure (66),
   - un couvercle (60) comportant une face supérieure (40) et, du côté opposé, une face inférieure, la face supérieure du support étant constituée par la face supérieure du couvercle,
- des moyens (64) de fixation du couvercle sur la base, ces moyens de fixation étant déplaçables de façon réversible entre :

- un état monté dans lequel le couvercle est fixé sans aucun degré de liberté sur la base et la face inférieure du couvercle est plaquée sur la face supérieure de la base, et
- un état démonté dans lequel le couvercle peut être désolidarisé de la base,

- un sillon (68) creusé dans la face supérieure de la base ou dans la face inférieure du couvercle, et
- la fibre optique (56) est reçue à l'intérieur de ce sillon de façon amovible.

3. Dispositif selon la revendication 1, dans lequel :

- du côté opposé à sa face supérieure, le support (220) comporte une face inférieure (224), et
- le support comporte un sillon (228) creusé dans cette face inférieure du support, ce sillon étant apte à recevoir la fibre optique de façon amovible.

4. Dispositif selon l'une quelconque des revendications précédentes, dans lequel l'unité (50) de traitement est configurée :

- pour obtenir les mesures de la température en utilisant une première partie des réseaux de Bragg lorsque le procédé de fabrication additive est mis en œuvre et pour détecter, à partir de ces mesures de la température, un défaut dans la pièce au cours de sa fabrication par le procédé de fabrication additive, et
- pour obtenir les mesures du signal acoustique au niveau d'une seconde partie des réseaux de Bragg lorsque le procédé de fabrication additive est mis en œuvre et pour détecter, à partir de ces mesures du signal acoustique, un défaut dans la pièce au cours de sa fabrication par le procédé de fabrication additive.

5. Dispositif selon la revendication 4, dans lequel l'unité (50) de traitement est configurée pour mesurer à la fois la température et le signal acoustique en utilisant le même réseau de Bragg.

6. Dispositif selon l'une quelconque des revendications précédentes, dans lequel le nombre de réseaux de Bragg est supérieur à dix ou vingt.

7. Dispositif selon l'une quelconque des revendications précédentes, dans lequel chaque réseau de Bragg de la fibre optique est **caractérisé par** une longueur d'onde interrogée à laquelle il réfléchit le signal optique incident et, pour chaque réseau de Bragg de la fibre optique, cette longueur d'onde interrogée de ce réseau de Bragg est séparée des longueurs d'onde interrogées des autres réseaux de Bragg de la fibre optique par au moins 1 nm.

8. Dispositif selon l'une quelconque des revendications précédentes, dans lequel l'unité (50) de traitement est apte à acquérir un signal optique ayant interagi avec l'un des réseaux de Bragg à une fréquence d'acquisition supérieure à 1 kHz.

9. Dispositif selon l'une quelconque des revendications précédentes, dans lequel l'unité de traitement est apte à obtenir une mesure de la température, au niveau d'un des points de mesure, qui dépasse 500°C.

10. Procédé de détection, à l'aide d'un dispositif de détection conforme à l'une quelconque des revendications précédentes, d'un défaut au cours de la fabrication d'une pièce par un procédé de fabrication additive, ce procédé de détection comportant :

- pour chaque point de mesure d'un premier groupe de points de mesure et à intervalle de temps régulier, le calcul (182) d'un écart type $\sigma_{1,p}$ représentatif de l'amplitude des variations de la température mesurée pendant une fenêtre glissante temporelle prédéterminée au niveau de ce point de mesure, les points de mesure de ce premier groupe étant situés sous la pièce en cours de fabrication, puis
- la détection (186) d'un défaut au niveau d'un point de mesure du premier groupe à partir des différentes valeurs successives de l'écart type $\sigma_{1,p}$ calculées pour chaque intervalle de temps régulier.

11. Procédé selon la revendication 10, dans lequel le procédé comporte :

- pour chaque point de mesure d'un second groupe de points de mesure et à intervalle de temps régulier, le calcul (182) d'un écart type $\sigma_{2,p}$ représentatif de l'amplitude des variations de la température mesurée pendant une fenêtre glissante temporelle prédéterminée au niveau de ce point de mesure, chaque point de mesure de ce second groupe n'étant situé sous aucune pièce métallique en cours de fabrication, puis
- le calcul (184) d'une moyenne des écarts types $\sigma_{2,p}$ pour obtenir un écart type $\sigma_{2,ref}$ de référence, puis
- la détection (186) d'un défaut au niveau d'un point de mesure du premier groupe à partir du ratio $\sigma_{1,p}/\sigma_{2,ref}$ calculé pour ce point de mesure.

**12.** Système de fabrication additive d'une pièce, ce système comportant :

- un appareil (10) de formation de couches successives empilées les unes sur les autres pour former, par empilement de ces couches, la pièce à fabriquer,
- un dispositif (12) de détection d'un défaut au cours de la fabrication de la pièce par l'appareil (10), ce dispositif comportant :

- un support (20 ; 220) comportant :

- une face supérieure (40) sur laquelle la pièce est fabriquée lorsque le procédé de fabrication additive est mis en œuvre,
- des points de mesures ($P_1$ à $P_{24}$) de la température ou d'un signal acoustique, ces points de mesure étant contenus dans un plan ($P_m$) de mesure situé sous la face supérieure et répartis dans ce plan de mesure de manière à ce que au moins l'un de ces points de mesure soit situé sous la pièce lorsque le procédé de fabrication additive est mis en œuvre,

- une unité (50) de traitement configurée :

- pour obtenir les mesures de la température ou du signal acoustique au niveau de chacun des points de mesure lorsque le procédé de fabrication additive est mis en œuvre,
- pour détecter, à partir de ces mesures, un défaut dans la pièce au cours de sa fabrication par le procédé de fabrication additive, et
- pour, en réponse à la détection d'un défaut, commander une interface homme-machine ou l'appareil de formation de manière à arrêter la fabrication de la pièce ou à modifier des paramètres de l'appareil de formation,

**caractérisé en ce que** le dispositif de détection est conforme à l'une quelconque des revendications 1 à 9.

**13.** Système selon la revendication 12, dans lequel l'appareil (10) de formation de couches successives est apte à former des couches successives de métal empilées les unes sur les autres pour former, par empilement de ces couches, l'ensemble des pièces métalliques à fabriquer.

**Patentansprüche**

**1.** Vorrichtung zur Detektion eines Fehlers bei der Fertigung eines Teils durch ein additives Fertigungsverfahren, diese Vorrichtung umfassend:

- einen Träger (20; 220), umfassend:

- eine Oberseite (40), auf der das Teil gefertigt wird, wenn das additive Fertigungsverfahren durchgeführt wird;
- Messpunkte ($P_1$ bis $P_{24}$) zum Messen der Temperatur oder eines akustischen Signals, wobei diese Messpunkte in einer Messebene ($P_m$) enthalten sind, die unter der Oberseite gelegen ist, und in dieser Messebene so verteilt sind, dass mindestens einer dieser Messpunkte unter dem Teil gelegen ist, wenn das additive Fertigungsverfahren durchgeführt wird,
- eine optische Faser (56), die sich von einem proximalen Ende (82) bis zu einem distalen Ende (80) erstreckt, wobei sie jeden der Messpunkte ($P_1$ bis $P_{24}$) durchläuft;
- eine Verarbeitungseinheit (50), die an das proximale Ende (82) der optischen Faser angeschlossen ist und dazu ausgestaltet ist, die Messungen der Temperatur oder des akustischen Signals an jedem der Messpunkte zu erhalten, wenn das additive Fertigungsverfahren durchgeführt wird, und ausgehend von diesen Messungen zu einen Fehler in dem Teil bei seiner Fertigung durch das additive Fertigungsverfahren zu detektieren,

**dadurch gekennzeichnet, dass**:

- die optische Faser an jedem dieser Messpunkte ein Bragg-Gitter umfasst, und
- die Verarbeitungseinheit (50) dazu ausgestaltet ist:

- die Messung der Temperatur oder des akustischen Signals an jedem der Messpunkte ausgehend von einer Messung eines optischen Signals zu erhalten, das mit dem an diesem Messpunkt gelegenen Bragg-Gitter interagiert hat, und
- die folgenden Schritte auszuführen:

- für jeden Messpunkt einer ersten Gruppe von Messpunkten und in regelmäßigen Zeitintervallen, das Berechnen einer Standardabweichung $\sigma_{1,P}$, die für die Amplitude der Änderungen der während eines vorbestimmten gleitenden Zeitfensters an diesem Messpunkt gemessenen Temperatur repräsentativ ist, wobei die Messpunkte dieser ersten Gruppe unter dem gerade gefertigten Teil gelegen sind, dann
- das Detektieren eines Fehlers an einem Messpunkt der ersten Gruppe ausgehend von den verschiedenen aufeinander folgenden Werten der Standardabweichung $\sigma_{1,p}$, die für jedes regelmäßige Zeitintervall berechnet werden.

2. Vorrichtung nach Anspruch 1, wobei der Träger umfasst:

- eine Basis (62), die eine Oberseite (66) umfasst,
- eine Abdeckung (60), die eine Oberseite (40) und auf der entgegengesetzten Seite eine Unterseite umfasst, wobei die Oberseite des Trägers durch die Oberseite der Abdeckung gebildet wird,
- Befestigungsmittel (64) zur Befestigung der Abdeckung an der Basis, wobei diese Befestigungsmittel reversibel verlagerbar sind zwischen:

- einem montierten Zustand, in dem die Abdeckung ohne irgendeinen Freiheitsgrad an der Basis befestigt ist und die Unterseite der Abdeckung an die Oberseite der Basis angepresst ist, und
- einem demontierten Zustand, in dem die Abdeckung von der Basis getrennt werden kann,
- eine vertiefte Rille (68) in der Oberseite der Basis oder in der Unterseite der Abdeckung, und
- die optische Faser (56) ist im Inneren dieser Rille entnehmbar aufgenommen.

3. Vorrichtung nach Anspruch 1, wobei:

- der Träger (220) auf der zu seiner Oberseite entgegengesetzten Seite eine Unterseite (224) umfasst, und
- der Träger eine vertiefte Rille (228) in dieser Unterseite des Trägers umfasst, wobei diese Rille in der Lage ist, die optische Faser entnehmbar aufzunehmen.

4. Vorrichtung nach einem der vorhergehenden Ansprüche, wobei die Verarbeitungseinheit (50) dazu ausgestaltet ist:

- die Messungen der Temperatur unter Verwendung eines ersten Teils der Bragg-Gitter zu erhalten, wenn das additive Fertigungsverfahren durchgeführt wird, und ausgehend von diesen Messungen der Temperatur einen Fehler in dem Teil bei seiner Fertigung durch das additive Fertigungsverfahren zu detektieren, und
- die Messungen des optischen Signals an einem zweiten Teil der Bragg-Gitter zu erhalten, wenn das additive Fertigungsverfahren durchgeführt wird, und ausgehend von diesen Messungen des akustischen Signals einen Fehler in dem Teil bei seiner Fertigung durch das additive Fertigungsverfahren zu detektieren.

5. Vorrichtung nach Anspruch 4, wobei die Verarbeitungseinheit (50) dazu ausgestaltet ist, sowohl die Temperatur als auch das akustische Signal unter Verwendung desselben Bragg-Gitters zu messen.

6. Vorrichtung nach einem der vorhergehenden Ansprüche, wobei die Anzahl der Bragg-Gitter größer als zehn oder zwanzig ist.

7. Vorrichtung nach einem der vorhergehenden Ansprüche, wobei jedes Bragg-Gitter der optischen Faser durch eine untersuchte Wellenlänge gekennzeichnet ist, bei der es das einfallende optische Signal reflektiert, und für jedes Bragg-Gitter der optischen Faser diese untersuchte Wellenlänge dieses Bragg-Gitters von den untersuchten Wellenlängen der anderen Bragg-Gitter der optischen Faser um mindestens 1 nm getrennt ist.

8. Vorrichtung nach einem der vorhergehenden Ansprüche, wobei die Verarbeitungseinheit (50) in der Lage ist, ein optisches Signal, das mit einem der Bragg-Gitter interagiert hat, mit einer Erfassungsfrequenz von mehr als 1 kHz zu erfassen.

9. Vorrichtung nach einem der vorhergehenden Ansprüche, wobei die Verarbeitungseinheit in der Lage ist, eine Messung der Temperatur an einem der Messpunkte, die 500 °C übersteigt, zu erhalten.

10. Verfahren zur Detektion eines Fehlers bei der Fertigung eines Teils durch ein additives Fertigungsverfahren mithilfe einer Vorrichtung zur Detektion nach einem der vorhergehenden Ansprüche, dieses Verfahren zur Detektion umfassend:

- für jeden Messpunkt einer ersten Gruppe von Messpunkten und in regelmäßigen Zeitintervallen, das Berechnen (182) einer Standardabweichung $\sigma_{1,p}$, die für die Amplitude der Änderungen der während eines vorbestimmten gleitenden Zeitfensters an diesem Messpunkt gemessenen Temperatur repräsentativ ist, wobei die Messpunkte dieser ersten Gruppe unter dem gerade gefertigten Teil gelegen sind, dann
- das Detektieren (186) eines Fehlers an einem Messpunkt der ersten Gruppe ausgehend von den verschiedenen aufeinander folgenden Werten der Standardabweichung $\sigma_{1,p}$, die für jedes regelmäßige Zeitintervall berechnet werden.

11. Verfahren nach Anspruch 10, wobei das Verfahren umfasst:

- für jeden Messpunkt einer zweiten Gruppe von Messpunkten und in regelmäßigen Zeitintervallen, das Berechnen (182) einer Standardabweichung $\sigma_{2,p}$, die für die Amplitude der Änderungen der während eines vorbestimmten gleitenden Zeitfensters an diesem Messpunkt gemessenen Temperatur repräsentativ ist, wobei jeder Messpunkt dieser zweiten Gruppe unter keinem gerade gefertigten Metallteil gelegen ist, dann
- das Berechnen (184) eines Mittelwerts der Standardabweichungen $\sigma_{2,p}$, um eine Referenz-Standardabweichung $\sigma_{2,ref}$ zu erhalten, dann
- das Detektieren (186) eines Fehlers an einem Messpunkt der ersten Gruppe ausgehend von dem für diesen Messpunkt berechneten Verhältnis $\sigma_{1,p}/\sigma_{2,ref}$.

12. System zur additiven Fertigung eines Teils, dieses System umfassend:

- ein Gerät (10) zum Bilden von aufeinander folgenden Schichten, die übereinander gestapelt werden, um durch Stapeln dieser Schichten das zu fertigende Teil zu bilden,
- eine Vorrichtung (12) zur Detektion eines Fehlers bei der Fertigung des Teils durch das Gerät (10), diese Vorrichtung umfassend:

- einen Träger (20; 220), umfassend:

- eine Oberseite (40), auf der das Teil gefertigt wird, wenn das additive Fertigungsverfahren durchgeführt wird;
- Messpunkte ($P_1$ bis $P_{24}$) zum Messen der Temperatur oder eines akustischen Signals, wobei diese Messpunkte in einer Messebene ($P_m$) enthalten sind, die unter der Oberseite gelegen ist, und in dieser Messebene so verteilt sind, dass mindestens einer dieser Messpunkte unter dem Teil gelegen ist, wenn das additive Fertigungsverfahren durchgeführt wird,
- eine Verarbeitungseinheit (50), die dazu ausgestaltet ist:

- die Messungen der Temperatur oder des akustischen Signals an jedem der Messpunkte zu erhalten, wenn das additive Fertigungsverfahren durchgeführt wird,
- ausgehend von diesen Messungen einen Fehler in dem Teil bei seiner Fertigung durch das additive Fertigungsverfahren zu detektieren, und
- als Reaktion auf die Detektion eines Fehlers eine Mensch-Maschine-Schnittstelle oder das Gerät zum Bilden so zu steuern, dass die Fertigung des Teils gestoppt wird oder die Parameter des Geräts zum Bilden geändert werden,

**dadurch gekennzeichnet, dass** die Vorrichtung zur Detektion einem der Ansprüche 1 bis 9 entspricht.

13. System nach Anspruch 12, wobei das Gerät (10) zum Bilden von aufeinander folgenden Schichten in der Lage ist, aufeinander folgende Metallschichten zu bilden, die übereinander gestapelt sind, um durch Stapeln dieser Schichten die Gesamtheit der zu fertigenden Metallteile zu bilden.

## Claims

1. Device for detecting a defect during the manufacturing of a component by an additive manufacturing method, this device comprising:

- a support (20; 220) comprising:

- an upper face (40) on which the component is manufactured when the additive manufacturing method is implemented,
- measuring points ($P_1$ to $P_{24}$) for measuring the temperature or an acoustic signal, these measuring points being contained in a measuring plane ($P_m$) located below the upper face and distributed in this measuring plane in such a way that at least one of these measuring points is located below the component when the additive manufacturing method is implemented,
- an optical fibre (56), which extends from a proximal end (82) to a distal end (80), passing through each of the measuring points ($P_1$ to $P_{24}$),
- a processing unit (50) connected to the proximal end (82) of the optical fibre and configured to obtain the measurements of the temperature or the acoustic signal at each of the measuring points when the additive manufacturing method is implemented and to detect, on the basis of these measurements, a defect in the component during the manufacturing thereof by the additive manufacturing method,

**characterized in that**:

- the optical fibre comprises, at each of these measuring points, a Bragg grating, and
- the processing unit (50) is configured:

  - to obtain the measurement of the temperature or the acoustic signal at each of the measuring points on the basis of a measurement of an optical signal that has interacted with the Bragg grating located at that measuring point, and
  - to perform the following steps:

    - for each measuring point of a first group of measuring points and at regular time intervals, calculating a standard deviation $\sigma1_{,p}$ representative of the amplitude of the variations in the temperature measured during a predetermined sliding time window at that measuring point, the measuring points of this first group being located under the component being manufactured, then
    - detecting a defect at a measuring point of the first group on the basis of the different successive values of the standard deviation $\sigma_{1,p}$ calculated for each regular time interval.

2. Device according to Claim 1, wherein the support comprises:

   - a base (62) comprising an upper face (66),
   - a cover (60) comprising an upper face (40) and, on the opposite side, a lower face, the upper face of the support being formed by the upper face of the cover,
   - means (64) for fastening the cover to the base, these fastening means being able to move reversibly between:

     - an assembled state in which the cover is fastened without any degree of freedom to the base and the lower face of the cover is pressed against the upper face of the base, and
     - a disassembled state in which the cover can be detached from the base,
   - a groove (68) hollowed out in the upper face of the base or in the lower face of the cover, and
   - the optical fibre (56) is removably received inside this groove.

3. Device according to Claim 1, wherein:

   - on the opposite side to its upper face, the support (220) comprises a lower face (224), and
   - the support comprises a groove (228) hollowed out in this lower face of the support, this groove being able to removably receive the optical fibre.

4. Device according to any one of the preceding claims, wherein the processing unit (50) is configured:

   - to obtain the temperature measurements using a first part of the Bragg gratings when the additive manufacturing method is implemented and to detect, on the basis of these temperature measurements, a defect in the component during the manufacturing thereof by the additive manufacturing method, and
   - to obtain the acoustic signal measurements at a second part of the Bragg gratings when the additive manufacturing method is implemented and to detect, on the basis of these acoustic signal measurements, a defect in the component during the manufacturing thereof by the additive manufacturing method.

5. Device according to Claim 4, wherein the processing unit (50) is configured to measure both the temperature and the acoustic signal using the same Bragg grating.

6. Device according to any one of the preceding claims, wherein the number of Bragg gratings is greater than ten or twenty.

7. Device according to any one of the preceding claims, wherein each Bragg grating of the optical fibre is **characterized by** an interrogated wavelength at which it reflects the incident optical signal and, for each Bragg grating of the optical fibre, this interrogated wavelength of this Bragg grating is separated from the interrogated wavelengths of the other Bragg gratings of the optical fibre by at least 1 nm.

8. Device according to any one of the preceding claims, wherein the processing unit (50) can acquire an optical signal that has interacted with one of the Bragg gratings at an acquisition frequency of greater than 1 kHz.

9. Device according to any one of the preceding claims, wherein the processing unit can obtain a temperature measurement that exceeds 500°C at one of the measuring points.

10. Method for detecting, by means of a detection device in accordance with any one of the preceding claims, a defect during the manufacturing of a component by an additive manufacturing method, this detection method comprising:

- for each measuring point of a first group of measuring points and at regular time intervals, calculating (182) a standard deviation $\sigma_{1,p}$ representative of the amplitude of the variations in the temperature measured during a predetermined sliding time window at that measuring point, the measuring points of this first group being located under the component being manufactured, then
- detecting (186) a defect at a measuring point of the first group on the basis of the different successive values of the standard deviation $\sigma_{1,p}$ calculated for each regular time interval.

11. Method according to Claim 10, wherein the method comprises:

- for each measuring point of a second group of measuring points and at regular time intervals, calculating (182) a standard deviation $\sigma_{2,p}$ representative of the amplitude of the variations in the temperature measured during a predetermined sliding time window at that measuring point, each measuring point of this second group not being located under any metal component being manufactured, then
- calculating (184) an average of the standard deviations $\sigma_{2,p}$ to obtain a reference standard deviation $\sigma_{2,ref}$, then
- detecting (186) a defect at a measuring point of the first group on the basis of the ratio $\sigma_{1,p}/\sigma_{2,ref}$ calculated for this measuring point.

12. System for the additive manufacturing of a component, this system comprising:

- an apparatus (10) for forming successive layers stacked on top of one another to form, by stacking these layers, the component to be manufactured,
- a device (12) for detecting a defect during the manufacturing of the component by the apparatus (10), this device comprising:

  - a support (20; 220) comprising:

    - an upper face (40) on which the component is manufactured when the additive manufacturing method is implemented,
    - measuring points ($P_1$ to $P_{24}$) for measuring the temperature or an acoustic signal, these measuring points being contained in a measuring plane ($P_m$) located below the upper face and distributed in this measuring plane in such a way that at least one of these measuring points is located below the component when the additive manufacturing method is implemented,
- a processing unit (50) configured:

  - to obtain the measurements of the temperature or the acoustic signal at each of the measuring points when the additive manufacturing method is implemented,
  - to detect, on the basis of these measurements, a defect in the component during the manufacturing thereof by the additive manufacturing method, and
  - to, in response to the detection of a defect, control a human-machine interface or the forming apparatus in such a way as to stop the manufacturing of the component or to modify parameters of the forming apparatus,

**characterized in that** the detection device is in accordance with any one of Claims 1 to 9.

13. System according to Claim 12, wherein the apparatus (10) for forming successive layers can form successive layers of metal stacked one on top of the other to form, by stacking these layers, the set of metal components to be manufactured.

Fig. 1

Fig. 2

Fig. 3

Fig. 4

Fig. 5

Fig. 7

Fig. 8

Fig. 6

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020290121 A1
- WO 2020222875 A1

- WO 2017216059 A1

**Littérature non-brevet citée dans la description**

- Fiber Optic Shape Sensors : A comprehensive review. **FLORIS IGNASIO et al.** Optics and Lasers in Engineering. Elsevier, 13 December 2020, vol. 139

- **ARNAUD RECOQUILLAY et al.** Guided wave imaging of composite plates using passive acquisitions by fiber Bragg gratings. *J. Acoustic, Soc. Am.*, May 2020, vol. 147 (5)